# EUROPEAN PATENT SPECIFICATION

(11) **EP 3 868 826 B1**
(45) Date of publication and mention of the grant of the patent: **25.11.2026**
(21) Application number: 19874001.1
(22) Date of filing: 04.10.2019
(51) Int. Cl.: C08J 9/00, C08J 9/14, C08K 9/08, C08K 3/02

(54) **QUASI-NONCOMBUSTIBLE PHENOLIC-RESIN COMPOSITION AND QUASI-NONCOMBUSTIBLE MATERIAL OBTAINED THEREFROM**
QUASI-NICHTBRENNBARE PHENOLHARZZUSAMMENSETZUNG UND DARAUS HERGESTELLTER QUASI-NICHTBRENNBARER WERKSTOFF
COMPOSITION DE RÉSINE PHÉNOLIQUE QUASI-NON-COMBUSTIBLE ET MATÉRIAU QUASI-NON-COMBUSTIBLE OBTENU À PARTIR DE CELLE-CI

(30) Priority: 16.10.2018 JP 2018194842
(43) Date of publication of application: 25.08.2021
(73) Proprietor: Asahi Yukizai Corporation, Nobeoka-shi, Miyazaki 882-8688 (JP)
(72) Inventor: YAMADA, Shuji, Niwa-gun, Aichi 480-0105 (JP)
(74) Representative: Mewburn Ellis LLP
(86) International application number: PCT/JP2019/039325
(87) International publication number: WO 2020/080148

(56) References cited:
- EP-A1- 3 275 927
- WO-A1-01/05888
- WO-A1-2006/043435
- WO-A1-2006/043435
- CN-A- 104 004 319
- JP-A- 2004 307 602
- JP-A- 2004 307 602
- JP-A- H07 330 995
- JP-A- H09 169 887
- JP-B2- 5 400 485
- KR-B1- 101 792 186

## Description

### TECHNICAL FIELD

The present invention relates to foam obtained by foaming and curing a quasi-noncombustible phenolic resin composition and a quasi-noncombustible material formed thereof.

### BACKGROUND ART

Conventionally, phenolic resin foam formed by foaming and curing a phenolic resin composition containing a predetermined blowing agent is admitted to have a relatively high flame resistance by itself, but the flame resistance of the conventional phenolic resin foam is not enough to sufficiently meet the safety requirements in fields such as construction, civil engineering and manufacture of electrical products, electronic components and automobile components. Thus, the conventional phenolic resin foam does not provide a material meeting the requirements for a quasi-noncombustible material, which requirements are defined in the Building Standard Law of Japan and are evaluated according to the method for assessing the heat release rate by means of a cone calorimeter.

For this reason, improvement of the flame resistance of intended phenolic resin foam has been pursued by adding a predetermined flame retardant to a phenolic resin composition, and curing the phenolic resin composition containing the flame retardant. For example, JPH02-49037A teaches to use phosphorus compounds, sulfur compounds or boron compounds as the flame retardant, and to obtain useful flame-resistant phenolic resin foam by adding those compounds to the resin composition for producing phenolic resin foam. Also JP2007-161810A and JP2007-70511A suggest using: metal hydroxides such as aluminum hydroxide and magnesium hydroxide; metal oxides such as calcium oxide and aluminum oxide; metal powders such as zinc powder; and metal carbonates such as calcium carbonate and magnesium carbonate, as an inorganic filler that is usually added to the resin composition for producing phenolic resin foam, so that the phenolic resin foam obtained by foaming the resin composition has improved flame resistance or fireproofness. Furthermore, JPS60-170636A and JPH08-176343A disclose that phenolic resin foam excellent in flame resistance is obtained by preparing a phenolic resin composition to include red phosphorus or ammonium polyphosphate as a non-halogen flame retardant capable of giving a high degree of flame resistance to resins, and foaming and curing the prepared phenolic resin composition.

Meanwhile, the Building Standard Law of Japan classifies materials into flame-resistant materials, quasi-noncombustible materials and noncombustible materials, in terms of fire-resistance and fire-prevention performance of the materials. The degree of the fire-prevention performance to be achieved by the flame-resistant, quasi-noncombustible and noncombustible materials increases in this order. That is, the quasi-noncombustible material should achieve the second highest fire-prevention performance after the fire-prevention performance of the noncombustible material. This requirement has been quite difficult for a phenolic resin material formed of phenolic resin foam to meet, the phenolic resin foam being produced by foaming and curing a mixture of: a resol-type phenolic resin, which is a kind of phenolic resin; and an acid curing agent, a blowing agent and the like, even when the flame retardants disclosed in the above-mentioned publications are used for giving a high degree of flame resistance to the phenolic resin material. Specifically, various problems may be caused if the amount of the above-mentioned flame retardants are increased to meet the requirement for the quasi-noncombustible material defined in the Building Standard Law, which requirement is a total heat release amount of 8.0 MJ/m² or less in a period of 10 minutes from the start of heating performed at a level of heat irradiance of 50 kW/m². For example, the increased amount of the flame retardant may inhibit the curing reaction of the phenolic resin composition, and thus formation of the intended phenolic resin foam. In addition, the increased amount of flame retardant may have adverse effects on physical properties such as thermal conductivity and mechanical properties of the obtained phenolic resin foam.

According to the regulation of Article 1, Paragraph 5 in the Cabinet Order for Enforcement of the Building Standard Law, the quasi-noncombustible material should meet the requirements that the maximum heat release rate of the material does not exceed 200 kW/m² continuously over a period of 10 seconds, and that the material has no crack and hole penetrating through its reverse side to cause harmful effects on fire-prevention, in addition to the above-mentioned requirement of the total heat release amount. Unfortunately, the conventional phenolic resin foam material containing the flame retardant does not fully satisfy such demands for the quasi-noncombustible material at the same time of securing the valuable physical or mechanical properties of the phenolic resin.

JPS60-170636A mentioned above indicates that phenolic resin foam containing red phosphorus can be more than flame-resistant foam, and equivalent to quasi-noncombustible foam. However, the inventor of the present invention examined this technique in detail and found that the phenolic resin foam containing red phosphorus still cannot meet the requirements for the quasi-noncombustible material defined in the Building Standard Law of Japan, although such foam enjoys an increased flame resistance. A further increased amount of red phosphorus proved not to achieve the purpose of meeting the requirements for the quasi-noncombustible material. In addition, it was found that an excessively increased amount of red phosphorus results in deterioration of the flame resistance of the phenolic resin foam on the contrary, because red phosphorus itself is combustible.

### PRIOR ART DOCUMENTS

### PATENT DOCUMENTS

Patent Document 1: JPH02-49037A
Patent Document 2: JP2007-161810A
Patent Document 3: JP2007-70511A
Patent Document 4: JPS60-170636A
Patent Document 5: JPH08-176343A

KR 101792186 B1 describes an external insulation material for construction characterized in that it is made by foaming and curing a semi-flammable resin composition containing a resol-type phenol resin, at least one selected from expanded graphite and a flame retardant, a foaming agent, a foam stabilizer, and an acid curing agent.

### SUMMARY OF THE INVENTION

### TECHNICAL PROBLEMS

The inventor of the present invention has made intensive studies to improve the flame-resistance or fire-prevention performance of the phenolic resin foam being produced by foaming and curing a foamable phenolic resin composition comprising a resol-type phenolic resin, which is a kind of phenolic resin, and an acid curing agent, a blowing agent and the like. As a result, the inventor has found that the quasi-noncombustible material defined in the Building Standard Law of Japan can be advantageously obtained by using a first component, which is red phosphorus powder as one of flame retardants, and a second component, which is at least one selected from the group consisting of inorganic flame retardants, halogen-based flame retardant and phosphorus-based flame retardants excluding red phosphorus, to form a flame retardant combination, and allowing the flame retardant combination to be included in the phenolic resin composition. More specifically described, the phenolic resin composition containing such a flame retardant composition permits phenolic resin foam, which is formed by foaming and curing the phenolic resin composition, to achieve excellent properties as foam, such as a low thermal conductivity, and improved flame-resistance or fire-prevention performance as well, as a result of the synergistic effect of the first and second components. Thus, the present invention was completed.

A problem to be solved by the present invention is to provide a quasi-noncombustible phenolic resin composition capable of: effectively achieving a low thermal conductivity in foam that is formed from a foamable phenolic resin composition indispensably containing a resol-type phenolic resin; improving flame-resistance or fire-prevention performance of the foam as a result of a synergistic effect of included components; and thus advantageously forming a quasi-noncombustible material defined in the Building Standard Law of Japan. It is another problem to be solved by the invention to advantageously obtain the quasi-noncombustible material defined in the Building Standard Law of Japan by using the quasi-noncombustible phenolic resin composition.

### SOLUTION TO PROBLEMS

To solve the above-mentioned problems, the present invention provides a foam as set out in the appended claim 1, and a quasi-noncombustible material as set out in the appended claim 10.

In one preferable embodiment, the flame retardant combination is contained in an amount of 2-35 parts by mass per 100 parts by mass of the resol-type phenolic resin, in terms of a total amount of the first component and the second component. Furthermore, the first component and the second component constituting the flame retardant combination are contained in an amount of 1-30 parts by mass and 1-10 parts by mass respectively, per 100 parts by mass of the resol-type phenolic resin.

In another preferable embodiment, the red phosphorus powder has a coating layer on its surface, the coating layer being formed of a metal oxide or a metal hydroxide and/or a thermosetting resin, whereby the phenolic resin foam having excellent properties according to the invention is advantageously formed.

Furthermore, in the present invention, the phosphorus-based flame retardant excluding red phosphorus is preferred to be ammonium polyphosphate powder having a coating layer on its surface, so that curing reaction of the phenolic resin composition is effectively promoted, and flame-resistance and fire-prevention performance according to the invention is further advantageously exhibited.

In one of the other preferred embodiments, the coating layer on the surface of the ammonium polyphosphate powder is formed of an insoluble thermosetting resin including phenolic resins and melamine resins. Among these resins, melamine resins are preferred in particular.

In the present invention, a halogenated alkene, or a chlorinated aliphatic hydrocarbon and/or an aliphatic hydrocarbon is/are preferably used as the blowing agent. Among these blowing agents, a mixture of isopentane and isopropylchloride is preferred in particular.

In addition, the resol-type phenolic resin used in the present invention is preferably prepared to have a viscosity of 2000 mPa•s or more at 25°C.

In the quasi-noncombustible material, the foam constituting the quasi-noncombustible material generally has a total heat release amount of 8.0 MJ/m² or less in a period of 10 minutes from the start of heating, the heating being performed at a level of heat irradiance of 50 kW/m² according to the method for assessing the heat release rate specified in ISO 5660.

### ADVANTAGEOUS EFFECTS OF THE INVENTION

As described above, the foam according to the invention comprises, as the constituents of the flame retardant combination, the first component and the second component. The synergistic effect of the two components effectively improves the flame-resistance or fire-prevention performance of a foamed material obtained by foaming and curing the quasi-noncombustible phenolic resin composition. Furthermore, the obtained foamed material is also given a low thermal conductivity desired for the phenolic resin foam.

Thus, by using the above-mentioned quasi-noncombustible phenolic resin composition, the phenolic resin foam as the quasi-noncombustible material defined in the Building Standard Law of Japan is easily and advantageously obtained.

### MODE FOR CARRYING OUT THE INVENTION

Meanwhile, a resol-type phenolic resin used in the present invention is advantageously produced by using an aldehyde in an amount of about 1.0-3.0 mol, and preferably about 1.5-2.5 mol, per 1 mol of a phenol, according to the following method. That is, the aldehyde and the phenol are subjected to reaction with each other under the presence of an alkaline reaction catalyst at a temperature ranging, for example, from 50°C to the reflux temperature, and the obtained reaction product is subjected to neutralization treatment. Subsequently, the reaction product is dehydrated and condensed under a reduced pressure condition, so as to have specific properties such as a viscosity of 2000 mPa•s or more at 25°C and a water content of 3-20% by mass, and preferably 5-18% by mass. Finally, suitable known additives are added to the reaction product as necessary.

Of course, in addition to the resol-type phenolic resin produced as described above, various known resol-type phenolic resins capable of being cured by an acid curing agent can be suitably used in the invention. It is also possible to use a resol-type phenolic resin modified by a suitable modifier.

By preparing the resol-type phenolic resin as described above to have a viscosity of 2000 mPa•s or more, preferably 2000-100000 mPa•s, more preferably 3000-80000 mPa•s, and further preferably 4000-30000 mPa•s at 25°C, an intended resin composition is further effectively obtained. More specifically, the intended resin composition is allowed to further effectively contain red phosphorus powder in a dispersed state, and the stability of the dispersed state can be more advantageously increased, thereby improving flame resistance and thermal conductivity of the obtained phenolic foam. When the viscosity of the resol-type phenolic resin is less than 2000 mPa•s, the red phosphorus powder is sedimented and is unevenly distributed, whereby the formed phenolic foam suffers from uneven portions and fails to have a sufficient degree of flame resistance and low thermal conductivity. In contrast, an excessively high viscosity over 100000 mPa•s causes difficulty in producing the intended phenolic foam.

Examples of phenols, which are one of the raw materials of the resol-type phenolic resin used in the method according to the invention, include phenol, o-cresol, m-cresol, p-cresol, p-tert-butylphenol, m-xylenol, bisphenol F and bisphenol A. Examples of aldehydes, which are the other of the raw materials and are used in combination with the phenol, include formaldehyde, paraformaldehyde, trioxane, polyoxymethylene and glyoxal. Furthermore, examples of reaction catalysts include potassium hydroxide, sodium hydroxide, barium hydroxide, calcium hydroxide, potassium carbonate and ammonia. Of course, the phenol, the aldehyde and the reaction catalyst are by no means limited to those described above, and any one or any combination of known phenols, aldehydes and reaction catalysts are suitably used.

In the invention, a specific blowing agent suitably selected from known blowing agents is used together with the above-mentioned resol-type phenolic resin, so as to form a phenolic resin composition for producing phenolic resin foam. The blowing agent is preferably a chlorinated aliphatic hydrocarbon and/or an aliphatic hydrocarbon, or a halogenated alkene, which have a low degree of global warming potential. Among them, the chlorinated aliphatic hydrocarbon and the halogenated alkene permit further advantageous improvement of quasi-noncombustibility and achievement of the low thermal conductivity of foam formed of the phenolic resin composition according to the invention.

The chlorinated aliphatic hydrocarbon as the blowing agent is preferably a chlorinated product of a linear- or branched-chain aliphatic hydrocarbon having typically about 2-5 carbon atoms, the number of bonded chlorine atoms being 1-4 in general. Specific examples of such chlorinated aliphatic hydrocarbons include dichloroethane, propylchloride, isopropylchloride, butylchloride, isobutylchloride, pentylchloride and isopentylchloride. Although any one or any combination of these chlorinated aliphatic hydrocarbons can be used, chloropropanes such as propylchloride and isopropylchloride are preferred among them, and isopropylchloride is particularly preferably used.

The aliphatic hydrocarbon as the blowing agent is suitably selected from conventional hydrocarbon-based blowing agents having about 3-7 carbon atoms. Examples of aliphatic hydrocarbons include propane, butane, pentane, isopentane, hexane, isohexane, neohexane, heptane, isoheptane and cyclopentane. Any one or any combination of these aliphatic hydrocarbons can be used.

Furthermore, in the invention, mixed blowing agents including the above-mentioned chlorinated aliphatic hydrocarbons and aliphatic hydrocarbons are also preferably used. The mixture ratio of the aliphatic hydrocarbon to the chlorinated aliphatic hydrocarbon is preferably between 25:75 and 5:95 on the mass basis. The mixed blowing agent of the two kinds of blowing agents preferably consists of isopentane and isopropylchloride, the combination of which permits further advantageous achievement of the purpose of the invention.

In the invention, the blowing agent can be also the halogenated alkene, which contributes to a further improvement of the properties of the obtained phenolic resin foam, in particular its flame resistance or fireproofness and the low thermal conductivity. The halogenated alkene with the above-mentioned characteristic includes so-called halogenated olefins and halogenated hydroolefins, and is typically an unsaturated hydrocarbon derivative with 2-6 carbon atoms that is formed by bonding chlorine or fluorine as a halogen to an alkene. Examples of halogenated alkenes include tetrafluoropropene, fluorochloropropene, trifluoromonochloropropene, pentafluoropropene, fluorochlorobutene and hexafluorobutene, which are formed by substituting a halogen, for example fluorine or chlorine, for at least one hydrogen in propene, butene, pentene and hexene. Also mixtures of the above-mentioned halogenated alkenes can be used as the blowing agent.

Specific examples of hydrofluoroolefins (HFO), which are one of the halogenated alkenes (halogenated olefins), include pentafluoropropene such as 1, 2, 3, 3, 3-pentafluoropropene (HFO1225ye), tetrafluoropropene such as 1, 3, 3, 3-tetrafluoropropene (HFO1234ze), 2, 3, 3, 3-tetrafluoropropene (HFO1234yf) and 1, 2, 3, 3-tetrafluoropropene (HFO1234ye), trifluoropropene such as 3, 3, 3-trifluoropropene (HFO1243zf), isomers of tetrafluorobutene (HFO1354), isomers of pentafluorobutene (HFO1345), isomers of hexafluorobutene (HFO1336) such as 1, 1, 1, 4, 4, 4-hexafluoro-2-butene (HFO1336mzz), isomers of heptafluorobutene (HFO1327), isomers of heptafluoropentene (HFO1447), isomers of octafluoropentene (HFO1438) and isomers of nonafluoropentene (HFO1429). In addition, examples of hydrochlorofluoroolefines (HCFO) include 1-chloro-3, 3, 3-trifluoropropene (HCFO-1233zd), 2-chloro-3, 3, 3-trifluoropropene (HCFO-1233xf), dichlorotrifluoropropene (HCFO1223), 1-chloro-2, 3, 3-trifluoropropene (HCFO-1233yd), 1-chloro-1, 3, 3-trifluoropropene (HCFO-1233zb), 2-chloro-1, 3, 3-trifluoropropene (HCFO-1233xe), 2-chloro-2, 2, 3-trifluoropropene (HCFO-1233xc), 3-chloro-1, 2, 3-trifluoropropene (HCFO-1233ye) and 3-chloro-1, 1, 2-trifluoropropene (HCFO-1233yc).

The total amount of the above-mentioned blowing agents contained in the phenolic resin composition according to the invention is generally 1-30 parts by mass, and preferably 5-25 parts by mass, per 100 parts by mass of the resol-type phenolic resin.

The blowing agent used in the invention preferably, but not limitedly, contains the above-mentioned chlorinated aliphatic hydrocarbon and/or aliphatic hydrocarbon, or the halogenated alkene. In addition, the blowing agent may contain a suitable amount of fluorinated hydrocarbons (chlorofluorocarbon substitutes) such as 1, 1, 1, 3, 3-pentafluorobutane, fluorinated chlorine hydrocarbons such as trichloromonofluoromethane and trichlorotrifluoroethane, water, ether compounds such as isopropyl ether, gases such as nitrogen, argon and carbon dioxide, and air, as long as they do not have adverse effects on the purpose of the invention.

The acid curing agent used in the invention is a curing catalyst, that is, a component for promoting curing reaction of the above-mentioned resol-type phenolic resin, and any conventional acid curing agent may be suitably selected and used. Examples of acid curing agents include: aromatic sulfonic acids such as benzenesulfonic acid, phenolsulfonic acid, cresolsulfonic acid, toluenesulfonic acid, xylenesulfonic acid and naphthalenesulfonic acid; aliphatic sulfonic acids such as methanesulfonic acid and trifluoromethanesulfonic acid; and inorganic acids such as sulfuric acid, phosphoric acid, polyphosphoric acid and fluoboric acid. Any one or any combination of these acid curing agents may be used. Among these acid curing agents, the aromatic sulphonic acids including phenolsulfonic acid, toluenesulfonic acid and naphthalenesulfonic acid are particularly preferably used. They permit a desirable curing rate in the production of the phenolic resin foam, whereby a further improved balance between the curing and the foaming by the blowing agent is permitted in the resol-type phenolic resin, to thereby achieve a desirable foaming structure of the phenolic resin foam. In the present invention, it is particularly recommended to use paratoluenesulfonic acid and xylenesulfonic acid together. The amount of paratoluenesulfonic acid is preferably more than that of xylenesulfonic acid on the mass basis. Specifically described, it is advantageous to set the ratio by mass of the paratoluenesulfonic acid to the xylenesulfonic acid between 51:49 and 95:5.

The amount of use of the acid curing agent is suitably determined depending on its kind and conditions including a temperature at the time of mixing with the above-mentioned resol-type phenolic resin. In the invention, it is preferable to use the acid curing agent in an amount of 1-50 parts by mass, preferably 5-30 parts by mass, and particularly preferably 7-25 parts by mass, per 100 parts by mass of the resol-type phenolic resin. When the amount of the acid curing agent is less than 1 part by mass, the curing rate is too low. On the other hand, when its amount is more than 50 parts by mass, the curing rate becomes excessively high, and the intended phenolic foam cannot be obtained.

The phenolic resin composition for producing phenolic resin foam, which comprises the above-mentioned essential components, contains a flame retardant combination of a first component and a second component. This flame retardant combination is contained for the purpose of giving excellent flame resistance of the quasi-noncombustibility to phenolic resin foam obtained from the phenolic resin composition, reducing or preventing increase of the thermal conductivity of the phenolic resin foam, and advantageously improving general properties as the phenolic resin foam.

Any conventional red phosphorus powder may be used as the first component of the flame retardant combination, usually by selecting from those commercially available. Examples of commercially available red phosphorus powder include products sold in the name of "NOVARED" and "NOVAEXCEL" manufactured by Rin Kagaku Kogyo Co., Ltd., "HISHIGUARD" manufactured by Nippon Chemical Industry Co., Ltd. and "EXOLIT" manufactured by Clariant AG. The above-mentioned red phosphorus powder preferably has a coating layer on its surface, so as to improve its handling ease and processability, and to enhance its dispersability into the resin composition and advantageously improve the effect of its addition. Specifically described, it is advantageous to use red phosphorus powder consisting of particles having a coating layer on their surface, which coating layer is formed of an inorganic compound including metal hydroxides such as aluminum hydroxide, magnesium hydroxide, zinc hydroxide and titanium hydroxide, metal oxides such as aluminum oxide, magnesium oxide, zinc oxide and titanium oxide, and/or a thermosetting resin including phenolic resin, furan resin and xylene-formaldehyde resin. The coating layer is generally formed in an amount of 1-30 parts by mass per 100 parts by mass of the red phosphorus powder.

The amount of use of the red phosphorus powder is determined within the range of generally 1-30 parts by mass, preferably 1-25 parts by mass, and further preferably 2-20 parts by mass, per 100 parts by mass of the resol-type phenolic resin. When the amount of the red phosphorus powder is too small, its effect to give the flame resistance or the fire preventiveness to the phenolic resin foam is not fully exhibited. On the other hand, when the amount of the red phosphorus powder is excessively large, the combustibility of the phenolic resin foam increases on the contrary, resulting in deterioration of its flame resistance or fire preventiveness. An excessively large amount of red phosphorus powder also results in a higher thermal conductivity of the phenolic resin foam, increases the viscosity of the composition to which the red phosphorus powder has been added thereby causing problems such as stirring deficiency, and makes it difficult to maintain a low thermal conductivity of the phenolic resin foam over the medium to long term.

Furthermore, the red phosphorus powder in the invention typically has an average particle diameter of 1-100 µm, and preferably 5-50 µm. The red phosphorus powder with an undesirably small particle diameter is difficult to handle and is not likely to achieve uniform dispersion into the resin composition, for example. In contrast, the red phosphorus powder with an excessively large particle diameter tends not to be uniformly dispersed in the resin composition either, whereby the purpose of the invention is not sufficiently achieved.

The second component of the flame retardant combination is selected from the group consisting of inorganic flame retardants, halogen-based flame retardants and phosphorus-based flame retardants excluding red phosphorus. Examples of phosphorus-based flame retardants excluding red phosphorus include various phosphoric acids and their salts, phenylphosphonic acid, phenylphosphinic acid, guanidine phosphate derivatives, carbamate phosphate derivatives, aromatic phosphates, aromatic condensed phosphates, halogenated phosphates, ammonium phosphate, ammonium polyphosphate and surface-coated ammonium polyphosphate. Among the phosphorus-based flame retardants described above, the ammonium polyphosphate powder hinders curing reaction of the resol-type phenolic resin when used in an amount of several parts or more per 100 parts by mass of the phenolic resin, so the amount of use of the ammonium polyphosphate powder should be limited to the range of about 1-3 parts by mass. Ammonium polyphosphate powder having a predetermined coating layer on its surface advantageously reduces this problem. That is, the surface-coated ammonium polyphosphate powder permits effective promotion of the curing reaction of the phenolic resin and formation of phenolic resin foam advantageously exhibiting excellent flame resistance, compressive strength, heat insulation performance and the like.

The surface-coated ammonium polyphosphate powder advantageously used as the second component includes powders obtained by coating or microcapsulizing ammonium polyphosphate particles with a thermosetting resin; powders obtained by coating the surface of ammonium polyphosphate particles with a melamine monomer, another nitrogen-containing organic compound or the like; and powders obtained by treating the ammonium polyphosphate particles with a surfactant or silicone. The powder is usually selected from commercially available products, and examples of such products include EXOLIT AP462 available from Clariant Chemicals Co., Ltd., and FR CROS486, FR CROS487, TERRAJU C30, TERRAJU C60, TERRAJU C70 and TERRAJU C80 available from CBC Co., Ltd. The surface coating layer of the ammonium polyphosphate powder is preferred to be insoluble to the phenolic resin composition that is a liquid, specifically, insoluble to water. As the insoluble thermosetting resin, phenolic resins and melamine resins are used, and the melamine resin is preferred among them. Also readily-soluble thermosetting resins are advantageously used to form an insoluble surface coating layer through curing reaction of a surface coating layer formed from the readily-soluble thermosetting resin. Thus, the ammonium polyphosphate powder having the surface coating layer formed of the insoluble thermosetting resin permits advantageous formation of phenolic resin foam with excellent compressive strength, heat insulation performance and the like.

Examples of inorganic flame retardants include metal hydroxides such as aluminum hydroxide and magnesium hydroxide; metal carbonates such as calcium carbonate, magnesium carbonate and barium carbonate; metal oxides such as calcium oxide, magnesium oxide, aluminum oxide and zinc oxide; zinc salts of inorganic acids such as zinc borate, zinc stannate and zinc carbonate; antimony compounds such as antimony trioxide and antimony pentaoxide; metal powders such as zinc powder; borax; boric acid; and ammonium sulfate. Among the above, the zinc salts such as zinc borate and zinc stannate are advantageously used.

Furthermore, examples of halogen-based flame retardants advantageously used include vinyl chloride resin powders, polyvinyl bromide powders, powders of tetrachlorobisphenol A, tetrabromobisphenol A, decabromodiphenylether and the like..

In the invention, the second component of the flame retardant combination comprises one or more of the above-mentioned phosphorus-based flame retardants excluding red phosphorus, inorganic flame retardants and halogen-based flame retardants. The total amount of the added second component is 1-10 parts by mass, and preferably 8 parts or less by mass, per 100 parts by mass of the resol-type phenolic resin. When the amount of addition is too small, the second component cannot fully exhibit the synergistic effect together with the first component (red phosphorus powder) to improve the flame-resistance or fire-prevention performance of the phenolic resin foam. On the other hand, when the amount of addition is too large, the second component results in problems of deteriorating the properties of the finally-obtained phenolic resin foam, and inhibiting the foaming and curing reaction of the phenolic resin composition, for example.

The total amount of the first and second components constituting the flame retardant combination contained in the phenolic resin composition according to the invention is suitably determined in accordance with the level of the flame-resistance or fire-prevention performance required in phenolic resin foam that is produced by foaming and curing the phenolic resin composition. Generally, the total amount is determined within the range of about 2-35 parts by mass, preferably 3-30 parts by mass, and more preferably 5-20 parts by mass per 100 parts by mass of the resol-type phenolic resin. When the total amount is too small, the first and second components cannot fully exhibit the effect to improve the flame-resistance or fire-prevention performance of the phenolic resin foam. On the other hand, when the total amount is too large, the first and second components result in problems of inhibiting the foaming and curing reaction of the phenolic resin composition, and having the adverse effect on the low thermal conductivity of the obtained phenolic resin foam, for example.

As described above, the quasi-noncombustible phenolic resin composition indispensably contains, together with the above-mentioned resol-type phenolic resin, the blowing agent, the acid curing agent and the flame retardant combination of the specific first component and second component. In addition, the phenolic resin composition may contain known foam stabilizers, plasticizers, urea and flame retardants other than the first and second components defined in the invention, as necessary.

Among the above-mentioned additives contained as necessary, the foam stabilizer is used for supporting mixture and emulsification of the mixed components in the phenolic resin composition, dispersing generated gas and stabilizing membranes of foam cells, for example. The kind of the foam stabilizer is not limited, and any foam stabilizer known in this technical field can be selected and used. Particularly preferably used are nonionic surfactants such as polysiloxane-based compounds, polyoxyethylenesorbitan fatty acid ester, ethylene oxide (EO) adducts of alkylphenol and EO adducts of castor oil. Any one or any combination of these foam stabilizers may be used in an amount not being limited, but generally ranging from 0.5 to 10 parts by mass per 100 parts by mass of the resol-type phenolic resin.

The plasticizer is advantageously used for giving flexibility to cell walls of the phenolic resin foam and reducing deterioration of its heat insulation performance over time, thereby advantageously contributing to the purpose of the invention as in the case of the first and second components constituting the flame retardant combination. The kind of the plasticizer is not limited, and any known plasticizer that has been used for producing phenolic resin foam can be used. For example, triphenyl phosphate, dimethyl terephthalate and dimethyl isophthalate may be used, and polyesterpolyol can be effectively used, too. In particular, polyesterpolyol has a good compatibility with a hydrophilic phenolic resin solution, and can be uniformly mixed with the phenolic resin, since polyesterpolyol has a structure including an ester bond and a hydroxyl group, which are hydrophilic and excellent in surface activity. Furthermore, polyesterpolyol is a preferable plasticizer also in that it prevents uneven distribution of cells. That is, polyesterpolyol allows the cells to be distributed evenly over the entirety of the foam, thereby permitting easy formation of phenolic resin foam (phenolic foam) having a uniform quality. The plasticizer is used generally in an amount of 0.1-20 parts by mass, preferably 0.5-15 parts by mass, and more preferably 1-12 parts by mass, per 100 parts by mass of the resol-type phenolic resin, whereby the effect of giving flexibility to the cell walls of the obtained phenolic resin foam is advantageously exhibited without deteriorating other properties of the phenolic resin foam. Thus, the purpose of the invention is further advantageously achieved.

In addition, the quasi-noncombustible phenolic resin composition preferably contains urea. Urea permits reducing an initial thermal conductivity of the phenolic resin foam to be obtained, and achieving a high degree of strength, in particular a low degree of brittleness, of the phenolic resin foam. Furthermore, urea advantageously contributes to keeping the thermal conductivity of the phenolic resin foam low over the medium to long term. Thus, the addition of urea permits easy formation of phenolic resin foam exhibiting excellent heat insulation performance with the long-term stability.

The quasi-noncombustible phenolic resin composition containing the above-mentioned components can be prepared as follows, for example. First, the above-mentioned flame retardant combination of the specific first component and second component is added to and mixed with the resol-type phenolic resin described above, and the above-mentioned foam stabilizer, plasticizer, urea and other components are added as necessary, to thereby obtain a mixture to which the above-mentioned chlorinated aliphatic hydrocarbon and/or aliphatic hydrocarbon, or halogenated alkene, for example, are/is added as the blowing agent. The mixture is then charged into a mixer together with the acid curing agent, and stirred, whereby the phenolic resin composition is prepared.

For forming the intended phenolic resin foam by using the thus prepared phenolic resin composition, various known methods can be employed. Examples of forming methods include: (1) a method in which the resin composition is supplied on a continuous conveyor belt, and foamed and cured; (2) a method in which the resin composition is partially filled into a certain space, and foamed and cured; (3) a method in which the resin composition is filled in a mold, and foamed and cured under pressure in the mold; (4) a method in which the resin composition is charged into a certain large space, and foamed and cured to form a foamed block; and (5) a method in which the resin composition is foamed within a hollow space at the same time as being introduced into the hollow space under pressure.

The above-mentioned forming method (1) as one of the forming methods includes the steps of supplying the above-mentioned phenolic resin composition on a continuously movable carrier, and passing the supplied composition through a heating zone to foam and form the supplied composition, whereby desired phenolic resin foam is produced. More specifically described, in the method (1), the above-mentioned phenolic resin composition is supplied onto a face material on a conveyor belt, and another face material is placed on the upper surface of the supplied resin material on the conveyor belt. Then, the resin material is introduced into a curing furnace. In the curing furnace, the resin material is pressed with another conveyor belt to be adjusted to a predetermined thickness, and the resin material is foamed and cured at about 60-100°C for about 2-15 minutes. The foam taken out of the curing furnace is cut into a predetermined length, whereby a phenolic resin foam having a desired shape is produced.

The kind of the face material used in the invention is not limited, and is typically selected from nonwoven fabrics of natural fiber, synthetic fiber such as polyester fiber and polyethylene fiber, inorganic fiber such as glass fiber; paper; aluminum-foil-clad nonwoven fabrics; metal plates and metal foils. Preferred face materials are nonwoven glass fabrics, spunbonded nonwoven fabrics, aluminum-foil-clad nonwoven fabrics, metal plates, metal foils, plywood, structural panels, particle boards, hardboards, wood cement boards, flexible plates, perlite plates, calcium silicate plates, magnesium carbonate plates, pulp cement boards, sheathing boards, medium density fiber boards, plaster boards, lath sheets, volcanic vitreous composite plates, natural stone, bricks, tiles, shaped materials of glass, shaped materials of light-weight cellular concrete, shaped materials of cement mortar, and shaped materials using water-curable cement hydrates as a binder component such as shaped materials of glass-fiber-reinforced cement. The face material may be provided on one surface of the phenolic foam, or on respective opposite surfaces of the phenolic foam. When the face materials are provided on the respective opposite surfaces of the foam, the face materials may be the same or different from each other. Further, the face material(s) may be later bonded to the surface(s) with an adhesive.

In summary, the thus obtained phenolic resin foam contains, as the constituents of the flame retardant combination, the first component and the second component in the dispersed state. Thus, the entire foam is allowed to have improved flame-resistance or fire-prevention performance as a result of the synergistic effect of the first and second components, such that the foam advantageously meets the requirements for a quasi-noncombustible material defined in the Building Standard Law of Japan, as evaluated in the method for assessing the heat release rate by means of a cone calorimeter. Specifically described, the phenolic resin foam of the invention is a flame-resistant material having a total heat release amount of 8.0 MJ/m² or less in a period of 10 minutes from the start of heating, the heating being performed at a level of heat irradiance of 50 kW/m² according to the method for assessing the heat release rate specified in ISO 5660. Thus, the phenolic resin foam of the invention can be advantageously used for various purposes as the quasi-noncombustible material.

The thus produced phenolic resin foam easily achieves a low thermal conductivity of generally 0.0230 W/m•K or less at 20°C, preferably 0.0200 W/m•K or less at 20°C, and further preferably 0.0195 W/m•K or less at 20°C. In addition, the above-mentioned phenolic resin foam is produced so as to have a closed cell content of generally 85% or more, and preferably 90% or more, whereby the phenolic resin foam advantageously exhibits the excellent properties of the foam including a low thermal conductivity, as well as excellent quasi-noncombustibility.

Furthermore, the phenolic resin foam has a density in the range of 10-150 kg/m³, preferably 15-100 kg/m³, more preferably 15-70 kg/m³, further preferably 20-50 kg/m³, and the most preferably 20-40 kg/m³. Phenolic resin foam having a density lower than 10 kg/m³ suffers from a low degree of strength, and the foam (foam product) may be broken at the time of delivery and construction. In addition, when the phenolic resin foam has a low density, cell membranes tend to be thin. In the case where the cell membrane is thin, the blowing agent in the foam (foam product) is easily substituted with the air. Furthermore, the thin cell membrane is likely to break while being foamed, whereby a good closed cell structure cannot be obtained in the resultant phenolic resin foam. Thus, the long-term heat insulation performance tends to decline in the phenolic foam with a low density. On the other hand, when the density of the phenolic resin foam exceeds 150 kg/m³, the heat conductivity of solids derived from solid components including the phenolic resin becomes undesirably high, whereby the heat insulation performance of the phenolic resin foam tends to decline.

### EXAMPLES

To clarify the present invention more specifically, some examples of the present invention will be described, and compared with comparative examples. In the examples and comparative examples described below, "%" and "part" respectively indicate "% by mass" and "part by mass", unless otherwise specified.

### - Example 1 -

1600 parts of phenol, 2282 parts of 47% formalin and 41.6 parts of a 50% aqueous solution of sodium hydroxide were charged in a three-necked flask equipped with a reflux condenser, a thermometer and a stirrer, and a reaction was carried out at 80°C for 70 minutes. The reaction mixture was cooled to 40°C, neutralized with a 50% aqueous solution of p-toluenesulfonic acid, and dehydrated and condensed to have a moisture content of 10% under heat and at a reduced pressure, whereby a liquid resol-type phenolic resin was obtained. The obtained liquid resol-type phenolic resin had a viscosity of 10000 mPa•s at 25°C, a number average molecular weight of 380 and a free phenol content of 4.0%.

Then, to 100 parts of the thus obtained liquid resol-type phenolic resin, there were added 3 parts of an ethylene oxide (EO) adduct of castor oil (molar amount of the added EO: 22) as a foam stabilizer, and 5 parts of urea as an additive. These liquid resol-type phenolic resin, foam stabilizer and additive were mixed with each other, whereby a uniform phenolic resin mixture was obtained.

Subsequently, to 108 parts of the thus obtained phenolic resin mixture, a flame retardant combination consisting of a first component and a second component, a blowing agent and a curing agent were added, the first component being 5 parts of surface-coated red phosphorus powder (NOVAEXCEL140 available from Rin Kagaku Kogyo Co., Ltd.; average particle diameter: 25-35 µm; with surface coating), the second component being 1 part of ammonium polyphosphate powder (FR CROS484 available from CBC Co., Ltd.; average particle diameter: 18 µm), the blowing agent being 9 parts of a mixture consisting of isopropylchloride and isopentane in a ratio by mass of 85:15, and the curing agent being 16 parts of a mixture consisting of p-toluenesulfonic acid and xylenesulfonic acid in a ratio by mass of 2:1. The phenolic resin mixture, the flame retardant combination, the blowing agent and the curing agent were stirred and mixed with each other, whereby a phenolic resin composition for producing phenolic resin foam was prepared.

The obtained foamable phenolic resin composition was filled in a formwork that had a width of 300 mm, a length of 300 mm and a thickness of 50 mm, and that had been preheated to a temperature of 70-75°C. The phenolic resin composition filled in the formwork was placed in an oven at 70-75°C and held in the oven for 10 minutes for foaming and curing, and further heated in a heating furnace at a temperature of 70°C for 12 hours for postcure. Thus, a phenolic resin foam (phenolic foam) was produced.

### - Examples 2 to 4 -

Various phenolic resin foams were produced in the same manner as in the Example 1, except that the surface-coated red phosphorus powder as the first component of the flame retardant combination and the surface-coated ammonium polyphosphate (TERRAJU C80 available from CBC Co., Ltd.; average particle diameter: 19 µm) as the second component of the flame retardant combination were used in amounts shown in the following Table 1.

### - Examples 5 to 10 (Example 10 being a Reference Example) -

Various phenolic resin foams were produced in the same manner as in the Example 1, except that the surface-coated red phosphorus powder as the first component of the flame retardant combination and the second component of the flame retardant combination were used in amounts shown in the following Table 1. As the second component, one of zinc borate, zinc stannate, aluminum hydroxide, polyvinyl chloride powder, tetrabromobisphenol A and expandable graphite was used.

### - Example 11 -

A phenolic resin foam was produced in the same manner as in the Example 2, except that hydrofluoroolefine (1,1,1,4,4,4-hexafluoro-2-butene: HFO-1336mzz, available from Chemours Company) was used as the blowing agent in an amount of 17.5 parts, in place of the blowing agent used in the Example 4.

### - Comparative Example 1 -

A phenolic resin foam was produced in the same manner as in the Example 1, except that the first component and the second component constituting the flame retardant combination were not used.

### - Comparative Examples 2 to 5 -

Various phenolic resin foams were produced in the same manner as in the Example 1, except that only the surface-coated red phosphorus powder was used as one of the constituents of the flame retardant combination in amounts shown in the following Table 2.

### - Comparative Examples 6 to 20 -

It was attempted to produce various phenolic resin foams in the same manner as in the Example 1, except that the surface-coated red phosphorus powder as the first component was not used, and only the second component was used as one of the constituents of the flame retardant combination in amounts shown in the following Tables 2 and 3. The second component was FR CROS484, TERRAJU C80, zinc borate, zinc stannate, aluminum hydroxide, polyvinyl chloride powder, tetrabromobisphenol A or expandable graphite. However, in the Comparative Examples 6, 8, 10 and 12, the curing reaction of the phenolic resin was insufficient, and foam with measurable physical properties was not obtained.

Each of the thus obtained phenolic resin foams (phenolic foams) was measured of the density, the amount of water absorption, the initial thermal conductivity, the closed cell content and the compressive strength according to the following methods. The obtained phenolic resin foam was also evaluated with respect to its quasi-noncombustibility, through a combustion test consisting of measurements of a total heat release amount and maximum heat release rate, and observation of the state of the foam after the test. The results are indicated in the following Tables 1 to 3 and 4 to 6.

### (1) Measurement of the density

The density of each foam was measured according to JIS A 9511:2003, "5.6 Density".

### (2) Measurement of the amount of water absorption

The amount of water absorption was measured according to JIS A 9511:2006R, "5.14 (Measuring method A)".

### (3) Measurement of the initial thermal conductivity

A 300 mm x 300 mm square sample of the phenolic resin foam was provided and cut into 200 mm x 200 mm square with a thickness of 50 mm. Then, the thermal conductivity of the sample was measured with a thermal conductivity tester HC-074 304 (available from Eko Instruments Co., Ltd.) according to the Heat Flow Meter method specified in JIS A1412-2:1999, with a low temperature plate being set at 10°C, and a high temperature plate being set at 30°C. Here, the thermal conductivity of the sample after it was left in a 70°C atmosphere for 4 days was defined as its initial thermal conductivity.

### (4) Measurement of the closed cell content

The closed cell content of the sample of the phenolic resin foam was measured according to ASTM D2856.

### (5) Measurement of the compressive strength

The compressive strength of the sample of the phenolic resin foam was measured according to the "5.9 Compressive strength" of JIS A 9511:2003.

### (6) Combustion test (evaluation of the quasi-noncombustibility)

A sample was prepared from each of the phenolic resin foams so as to have a height of 99±1 mm and a width of 99±1 mm, with a thickness of 50 mm. The sample was measured of its total heat release amount and maximum heat release rate in 10 minutes of heating by using a cone calorimeter (CONE III, manufactured by Toyo Seiki Seisaku-sho, Ltd.), according to "Method of tests and evaluations of fireproof and fire-resisting performance, 4.12.1 Tests and evaluations of exothermicity" edited by the General Building Research Corporation of Japan, pursuant to the regulation of ISO 5660. The mean value of the obtained total heat release amounts and maximum heat release rates for three samples per each foam was defined as the result of the measurement. In addition, the samples after the evaluation were observed to see whether they had any crack and hole penetrating through their reverse sides.

**Table 1**

| | Flame retardant combination | | | | Density (kg/m³) | Amount of water absorption (g/100cm²) | Initial thermal conductivity [20°C] (W/m·K) |
|---|---|---|---|---|---|---|---|
| | First component | | Second component | | | | |
| | Kind | Added amount (part) | Kind | Added amount (part) | | | |
| Example 1 | Surface-coated red phosphorus powder | 5 | FR CROS484 | 1 | 34 | 5.8 | 0.01903 |
| Example 2 | Surface-coated red phosphorus powder | 15 | TERRAJU C80 | 3 | 37 | 5.6 | 0.01911 |
| Example 3 | Surface-coated red phosphorus powder | 25 | TERRAJU C80 | 5 | 40 | 5.4 | 0.01928 |
| Example 4 | Surface-coated red phosphorus powder | 30 | TERRAJU C80 | 5 | 41 | 5.5 | 0.01930 |
| Example 5 | Surface-coated red phosphorus powder | 10 | Zinc borate | 3 | 37 | 6.7 | 0.01943 |
| Example 6 | Surface-coated red phosphorus powder | 10 | Zinc stannate | 5 | 37 | 5.6 | 0.01943 |
| Example 7 | Surface-coated red phosphorus powder | 10 | Aluminum hydroxide | 5 | 38 | 4.0 | 0.01988 |
| Example 8 | Surface-coated red phosphorus powder | 10 | Polyvinyl chloride powder | 3 | 37 | 7.8 | 0.01945 |
| Example 9 | Surface-coated red phosphorus powder | 10 | Tetrabromobisphenol A | 5 | 37 | 5.9 | 0.01930 |
| Example 10 (ref.) | Surface-coated red phosphorus powder | 10 | Expandable graphite | 5 | 37 | 5.8 | 0.01937 |
| Example 11 | Surface-coated red phosphorus powder | 15 | TERRAJU C80 | 3 | 37 | 5.7 | 0.01776 |

**Table 2**

| | Flame retardant combination | | | | Density (kg/m³) | Amount of water absorption (g/100cm²) | Initial thermal conductivity [20°C] (W/m·K) |
|---|---|---|---|---|---|---|---|
| | First component | | Second component | | | | |
| | Kind | Added amount (part) | Kind | Added amount (part) | | | |
| Comparative Example 1 | - | - | - | - | 34 | 5.1 | 0.01915 |
| Comparative Example 2 | Surface-coated red phosphorus powder | 10 | - | - | 35 | 5.7 | 0.01908 |
| Comparative Example 3 | Surface-coated red phosphorus powder | 15 | - | - | 37 | 5.6 | 0.01908 |
| Comparative Example 4 | Surface-coated red phosphorus powder | 25 | - | - | 39 | 5.4 | 0.01919 |
| Comparative Example 5 | Surface-coated red phosphorus powder | 35 | - | - | 42 | 5.3 | 0.01935 |
| Comparative Example 6 | - | - | FR CROS484 | 6 | Good foam was not obtained because of insufficient curing | | |
| Comparative Example 7 | - | - | TERRAJU C80 | 10 | 34 | 7.3 | 0.01933 |
| Comparative Example 8 | - | - | TERRAJU C80 | 35 | Good foam was not obtained because of insufficient curing | | |
| Comparative Example 9 | - | - | Zinc borate | 5 | 34 | 10.0 | 0.01948 |
| Comparative Example 10 | - | - | Zinc borate | 13 | Good foam was not obtained because of insufficient curing | | |

**Table 3**

| | Flame retardant combination | | | | Density (kg/m³) | Amount of water absorption (g/100cm²) | Initial thermal conductivity [20°C] (W/m·K) |
|---|---|---|---|---|---|---|---|
| | First component | | Second component | | | | |
| | Kind | Added amount (part) | Kind | Added amount (part) | | | |
| Comparative Example 11 | - | - | Zinc stannate | 5 | 34 | 5.4 | 0.01955 |
| Comparative Example 12 | - | - | Zinc stannate | 15 | Good foam was not obtained because of insufficient curing | | |
| Comparative Example 13 | - | - | Aluminum hydroxide | 10 | 35 | 3.7 | 0.02180 |
| Comparative Example 14 | - | - | Aluminum hydroxide | 15 | 38 | 3.5 | 0.02422 |
| Comparative Example 15 | - | - | Polyvinyl chloride powder | 5 | 34 | 14.4 | 0.01950 |
| Comparative Example 16 | - | - | Polyvinyl chloride powder | 13 | 37 | 15.5 | 0.01983 |
| Comparative Example 17 | - | - | Tetrabromo-bisphenol A | 5 | 34 | 5.8 | 0.01930 |
| Comparative Example 18 | - | - | Tetrabromo-bisphenol A | 15 | 37 | 5.8 | 0.01978 |
| Comparative Example 19 | - | - | Expandable graphite | 10 | 35 | 5.0 | 0.01957 |
| Comparative Example 20 | - | - | Expandable graphite | 15 | 37 | 4.8 | 0.01955 |

**Table 4**

| | Closed cell content (%) | Compressive strength (N/cm²) | Combustion test (10 min.) | | |
|---|---|---|---|---|---|
| | | | Total heat release amount (MJ/m²) | Maximum heat release rate (kW/m²) | Existence of cracks and holes penetrating through the reverse side |
| Example 1 | 94 | 17.3 | 7.8 | 40 | No |
| Example 2 | 93 | 20.6 | 5.0 | 28 | No |
| Example 3 | 92 | 18.3 | 7.5 | 45 | No |
| Example 4 | 92 | 17.3 | 8.0 | 51 | No |
| Example 5 | 91 | 17.1 | 7.6 | 58 | No |
| Example 6 | 93 | 13.8 | 7.1 | 60 | No |
| Example 7 | 90 | 13.0 | 8.0 | 29 | No |
| Example 8 | 92 | 15.5 | 7.1 | 23 | No |
| Example 9 | 91 | 18.2 | 7.0 | 33 | No |
| Example 10 (ref.) | 93 | 15.5 | 7.0 | 57 | No |
| Example 11 | 91 | 15.7 | 4.5 | 16 | No |

**Table 5**

| | Closed cell content (%) | Compressive strength (N/cm²) | Combustion test (10 min.) | | |
|---|---|---|---|---|---|
| | | | Total heat release amount (MJ/m²) | Maximum heat release rate (kW/m²) | Existence of cracks and holes penetrating through the reverse side |
| Comparative Example 1 | 94 | 18.0 | 28.3 | 95 | Yes |
| Comparative Example 2 | 94 | 16.7 | 8.9 | 44 | No |
| Comparative Example 3 | 94 | 16.6 | 8.4 | 53 | No |
| Comparative Example 4 | 93 | 14.3 | 12.2 | 70 | No |
| Comparative Example 5 | 85 | 14.2 | 20.1 | 98 | Yes |
| Comparative Example 6 | Good foam was not obtained because of insufficient curing | | | | |
| Comparative Example 7 | 91 | 18.4 | 8.5 | 49 | No |
| Comparative Example 8 | Good foam was not obtained because of insufficient curing | | | | |
| Comparative Example 9 | 90 | 17.1 | 15.3 | 59 | Yes |
| Comparative Example 10 | Good foam was not obtained because of insufficient curing | | | | |

**Table 6**

| | Closed cell content (%) | Compressive strength (N/cm²) | Combustion test (10 min.) | | |
|---|---|---|---|---|---|
| | | | Total heat release amount (MJ/m²) | Maximum heat release rate (kW/m²) | Existence of cracks and holes penetrating through the reverse side |
| Comparative Example 11 | 92 | 12.9 | 18.4 | 76 | Yes |
| Comparative Example 12 | Good foam was not obtained because of insufficient curing | | | | |
| Comparative Example 13 | 80 | 14.1 | 19.8 | 75 | Yes |
| Comparative Example 14 | 78 | 12.7 | 15.8 | 71 | Yes |
| Comparative Example 15 | 92 | 12.8 | 12.2 | 66 | No |
| Comparative Example 16 | 90 | 11.8 | 11.0 | 55 | No |
| Comparative Example 17 | 92 | 18.2 | 11.8 | 60 | No |
| Comparative Example 18 | 89 | 15.9 | 10.7 | 53 | No |
| Comparative Example 19 | 90 | 14.3 | 20.2 | 75 | Yes |
| Comparative Example 20 | 93 | 16.7 | 19.8 | 73 | Yes |

As is apparent from the results shown in Tables 1 and 4, all of the phenolic resin foams formed in the Examples 1-11 had a total heat release amount of 8 MJ/m² or less and a maximum heat release rate under the predetermined value in the combustion test for 10 minutes. Thus, those foams proved to be useful as the quasi-noncombustible material defined in the Building Standard Law of Japan. Besides, the phenolic resin foams obtained in the Examples also enjoyed a low initial thermal conductivity and a sufficient degree of compressive strength. It was recognized that those phenolic resin foams were excellent both in the heat insulation performance and in the physical or mechanical properties.

In contrast, in the Comparative Example 1, the flame retardant combination was not used, and in the Comparative Examples 2 to 20, either the first component or the second component was used alone as the flame retardant in an increased amount. All of the thus obtained phenolic resin foams had a total heat release amount exceeding 8 MJ/m², and consequently did not meet the requirement for the quasi-noncombustible material defined in the Building Standard Law of Japan. In the Comparative Examples 6, 8, 10 and 12, the second component as one of the constituents of the flame retardant combination was used in an excessively large amount, whereby the curing reaction of the phenolic resin did not proceed smoothly. Thus, in these Comparative Examples it was shown that foam whose physical properties were measurable was not obtained.

### - Evaluation of the dispersion stability of the flame retardant combination

A resol-type phenolic resin was obtained as in the case of the Example 1, and water was suitably added to the resol-type phenolic resin, whereby various resol-type phenolic resins having viscosities as indicated in the following Table 7 were prepared. The viscosity of each resol-type phenolic resin was measured at a test temperature of 25°C by means of a Brookfield viscometer, according to JIS K 7117-1. Subsequently, 100 parts of each of the resol-type phenolic resins, and the flame retardant combination consisting of 5 parts of the red phosphorus powder and 5 parts of zinc borate used in the Examples were mixed with each other and accommodated in a glass screw tube bottle having a volume of 110 ml and a body diameter of 40 mm. The screw tube bottle was allowed to stand still for one week at the room temperature. Then, the mixture of the resol-type phenolic resin and the flame retardant combination was evaluated with respect to whether it accumulated sediment in the screw tube bottle or not, and the thickness of a layer of the accumulated sediment, if any. The state of accumulation of sediment was evaluated as Good if no sediment was observed, and Average if the thickness of the sediment layer was 5 mm or less, and Poor if the thickness of the sediment layer was over 5 mm. The results are shown in the following Table 3.

**Table 7**

| Viscosity of the resol-type phenolic resin (mPa·s/25°C) | Evaluation of the sediment layer |
|---|---|
| 1000 | Poor |
| 2000 | Average |
| 3000 | Good |
| 4000 | Good |
| 10000 | Good |

As is shown in Table 7, in the case where the resol-type phenolic resin had a viscosity of 1000 mPa•s at 25°C, mixing of such a phenolic resin with the red phosphorus powder and zinc borate resulted in remarkable accumulation of sediment, and thus formation of a thick sediment layer. In contrast, the resol-type phenolic resin having a viscosity of 3000 mPa•s or more at 25°C did not suffer from accumulation of sediment, and thus formation of a sediment layer, even when mixed with the red phosphorus powder and zinc borate. In the case where the resol-type phenolic resin had a viscosity of 2000 mPa•s at 25°C, mixing of the phenolic resin with the red phosphorus powder and zinc borate caused accumulation of sediment to some extent. However, the accumulation of sediment was considered to have little effect on the practical use of the phenolic resin.

## Claims

1. A foam obtained by foaming and curing a quasi-noncombustible phenolic resin composition, the quasi-noncombustible phenolic resin composition comprising
a resol-type phenolic resin, a blowing agent and an acid curing agent, and
further comprising a flame retardant combination of a first component and a second component,
the first component being red phosphorus powder, and
the second component being at least one selected from the group consisting of inorganic flame retardants, halogen-based flame retardants and phosphorus-based flame retardants excluding red phosphorus.

2. The foam according to claim 1, wherein the flame retardant combination is contained in an amount of 2-35 parts by mass per 100 parts by mass of the resol-type phenolic resin, in terms of a total amount of the first component and the second component.

3. The foam according to claim 1 or 2, wherein the first component and the second component constituting the flame retardant combination are contained in an amount of 1-30 parts by mass and 1-10 parts by mass respectively, per 100 parts by mass of the resol-type phenolic resin.

4. The foam according to any one of claims 1 to 3, wherein the red phosphorus powder has a coating layer on its surface, the coating layer being formed of a metal oxide or a metal hydroxide and/or a thermosetting resin.

5. The foam according to any one of claims 1 to 4, wherein the phosphorus-based flame retardant excluding red phosphorus is ammonium polyphosphate powder having a coating layer on its surface.

6. The foam according to claim 5, wherein the coating layer on the surface of the ammonium polyphosphate powder is formed of an insoluble thermosetting resin.

7. The foam according to any one of claims 1 to 6, the quasi-noncombustible phenolic resin composition comprising a halogenated alkene, or a chlorinated aliphatic hydrocarbon and/or an aliphatic hydrocarbon as the blowing agent.

8. The foam according to any one of claims 1 to 6, wherein the blowing agent is a mixture of isopentane and isopropylchloride.

9. The foam according to any one of claims 1 to 8, wherein the resol-type phenolic resin is prepared to have a viscosity of 2000 mPa•s or more at 25°C as measured according to the method of the description.

10. A quasi-noncombustible material formed of the foam according to any one of claims 1 to 9.

11. The quasi-noncombustible material according to claim 10, wherein the foam constituting the quasi-noncombustible material has a total heat release amount of 8.0 MJ/m² or less in a period of 10 minutes from the start of heating, the heating being performed at a level of heat irradiance of 50 kW/m² according to the method for assessing the heat release rate specified in ISO 5660.

## Patentansprüche

1. Schaumstoff, der durch Aufschäumen und Härten einer quasi nichtbrennbaren Phenolharz-Zusammensetzung erhalten wurde, wobei die quasi nichtbrennbare Phenolharz-Zusammensetzung Folgendes umfasst:
ein Phenolharz von Resol-Typ, ein Treibmittel und ein saures Härtungsmittel; und weiters Folgendes umfasst:
eine flammhemmende Kombination aus einer ersten Komponente und einer zweiten Komponente,
wobei die erste Komponente rotes Phosphorpulver ist und
die zweite Komponente zumindest eines aus der aus anorganischen Flammschutzmitteln, Flammschutzmitteln auf Halogenbasis und Flammschutzmitteln auf Phosphorbasis mit Ausnahme von rotem Phosphor bestehenden Gruppe ausgewählt ist.

2. Schaumstoff nach Anspruch 1, wobei die flammhemmende Kombination, bezogen auf die Gesamtmenge der ersten Komponente und der zweiten Komponente, in einer Menge von 2 bis 35 Massenteilen pro 100 Massenteile des Phenolharzes vom Resol-Typ enthalten ist.

3. Schaumstoff nach Anspruch 1 oder 2, wobei die erste Komponente und die zweite Komponente, welche die flammhemmende Kombination bilden, in einer Menge von 1 bis 30 Massenteilen bzw. 1 bis 10 Massenteilen pro 100 Massenteile des Phenolharzes vom Resol-Typ enthalten sind.

4. Schaumstoff nach einem der Ansprüche 1 bis 3, wobei das rote Phosphorpulver eine Überzugsschicht auf seiner Oberfläche aufweist, wobei die Überzugsschicht aus einem Metalloxid oder einem Metallhydroxid und/oder einem Duroplast besteht.

5. Schaumstoff nach einem der Ansprüche 1 bis 4, wobei das Flammschutzmittel auf Phosphorbasis mit Ausnahme von rotem Phosphor Ammoniumpolyphosphat-Pulver mit einer Überzugsschicht auf seiner Oberfläche ist.

6. Schaumstoff nach Anspruch 5, wobei die Überzugsschicht auf der Oberfläche des Ammoniumpolyphosphat-Pulvers aus einem unlöslichen Duroplast besteht.

7. Schaumstoff nach einem der Ansprüche 1 bis 6, wobei die quasi nichtbrennbare Phenolharz-Zusammensetzung ein halogeniertes Alken oder einen chlorierten aliphatischen Kohlenwasserstoff und/oder einen aliphatischen Kohlenwasserstoff als Treibmittel umfasst.

8. Schaumstoff nach einem der Ansprüche 1 bis 6, wobei das Treibmittel ein Gemisch aus Isopentan und Isopropylchlorid ist.

9. Schaumstoff nach einem der Ansprüche 1 bis 8, wobei das Phenolharz vom Resol-Typ so hergestellt ist, dass es eine Viskosität von 2.000 mPa·s oder mehr bei 25 °C aufweist, die nach dem Verfahren der Beschreibung gemessen wird.

10. Quasi nichtbrennbares Material, das aus einem Schaumstoff nach einem der Ansprüche 1 bis 9 hergestellt wird.

11. Quasi nichtbrennbares Material nach Anspruch 10, wobei der Schaumstoff, der das quasi nichtbrennbare Material bildet, eine Gesamtmenge der Wärmefreisetzung von 8,0 MJ/m² oder weniger über einen Zeitraum von 10 Minuten nach Beginn des Erhitzens aufweist, wobei das Erhitzen mit einer Wärmestromdichte von 50 kW/m² gemäß dem in ISO 5660 spezifizierten Verfahren zur Beurteilung der Wärmefreisetzungsrate durchgeführt wird.

## Revendications

1. Mousse obtenue par moussage et durcissement d'une composition de résine phénolique quasi-incombustible, la composition de résine phénolique quasi-incombustible comprenant
une résine phénolique de type résol, un agent d'expansion et un agent de durcissement acide, et
comprenant en outre une combinaison ignifuge d'un premier composant et d'un second composant,
le premier composant étant de la poudre de phosphore rouge, et
le second composant étant au moins un certain sélectionné dans le groupe constitué d'ignifugeants inorganiques, d'ignifugeants à base d'halogène et d'ignifugeants à base de phosphore à l'exclusion du phosphore rouge.

2. Mousse selon la revendication 1, dans laquelle la combinaison d'ignifugeants est contenue en une quantité de 2 à 35 parties en masse pour 100 parties en masse de la résine phénolique de type résol, en termes de quantité totale du premier composant et du second composant.

3. Mousse selon la revendication 1 ou 2, dans laquelle le premier composant et le second composant constituant la combinaison d'ignifugeant sont contenus en une quantité de 1 à 30 parties en masse et de 1 à 10 parties en masse respectivement, pour 100 parties en masse de la résine phénolique de type résol.

4. Mousse selon l'une quelconque des revendications 1 à 3, dans laquelle la poudre de phosphore rouge présente une couche de revêtement sur sa surface, la couche de revêtement étant formée d'un oxyde métallique ou d'un hydroxyde métallique et/ou d'une résine thermodurcissable.

5. Mousse selon l'une quelconque des revendications 1 à 4, dans laquelle le retardateur de flamme à base de phosphore à l'exclusion du phosphore rouge est une poudre de polyphosphate d'ammonium présentant une couche de revêtement sur sa surface.

6. Mousse selon la revendication 5, dans laquelle la couche de revêtement sur la surface de la poudre de polyphosphate d'ammonium est formée d'une résine thermodurcissable insoluble.

7. Mousse selon l'une quelconque des revendications 1 à 6, la composition de résine phénolique quasi incombustible comprenant un alcène halogéné, ou un hydrocarbure aliphatique chloré et/ou un hydrocarbure aliphatique comme agent d'expansion.

8. Mousse selon l'une quelconque des revendications 1 à 6, dans laquelle l'agent d'expansion est un mélange d'isopentane et de chlorure d'isopropyle.

9. Mousse selon l'une quelconque des revendications 1 à 8, dans laquelle la résine phénolique de type résol est préparée pour présenter une viscosité de 2000 mPa•s ou plus à 25°C telle que mesurée selon le procédé de la description.

10. Matériau quasi-incombustible formé de la mousse selon l'une quelconque des revendications 1 à 9.

11. Matériau quasi-incombustible selon la revendication 10, dans lequel la mousse constituant le matériau quasi-incombustible présente une quantité de libération de chaleur totale de 8,0 MJ/m² ou moins dans une période de 10 minutes à compter du début du chauffage, le chauffage étant effectué à un niveau d'irradiance thermique de 50 kW/m² selon le procédé d'évaluation du taux de libération de chaleur spécifié dans la norme ISO 5660.
